# EUROPÄISCHE PATENTSCHRIFT

(11) **EP 3 372 843 B1**
(45) Veröffentlichungstag und Bekanntmachung des Hinweises auf die Patenterteilung: **28.12.2022**
(21) Anmeldenummer: 18160224.4
(22) Anmeldetag: 06.03.2018
(51) Int. Cl.: F04D 29/66, F04D 27/00

(54) **VERFAHREN ZUM BETREIBEN EINES LÜFTUNGSGERÄTS SOWIE ENTSPRECHENDES LÜFTUNGSGERÄT**
METHOD FOR OPERATING A VENTILATON APPARATUS AND CORRESPONDING VENTILATON APPARATUS
PROCÉDÉ DE FONCTIONNEMENT D'UN APPAREIL DE VENTILATION ET APPAREIL DE VENTILATION CORRESPONDANT

(30) Priorität: 10.03.2017 DE 102017204046
(43) Veröffentlichungstag der Anmeldung: 12.09.2018
(73) Patentinhaber: MAICO Elektroapparate-Fabrik GmbH, 78056 Villingen-Schwenningen (DE)
(72) Erfinder: Wiedmann, Frank, 78609 Tuningen (DE)
(74) Vertreter: Dietz, Christopher Friedrich

(56) Entgegenhaltungen:
- WO-A2-2012/025904
- DE-A1- 10 141 124
- DE-A1-102005 045 137
- DE-A1-102013 204 135
- US-A1- 2011 000 652
- Reichert Erik: "Ventilatoren mit druck- und volumenstromkonstanter Regelung", KI Luft- und Kältetechnik, vol. 1-2, 1 January 2005 (2005-01-01), pages 39-41, XP055844257,

## Beschreibung

Die Erfindung betrifft ein Verfahren zum Betreiben eines Lüftungsgeräts gemäß Anspruch 1, wobei das Lüftungsgerät einen Radialventilator zum Fördern von Luft aufweist, der über ein Radialventilatorlaufrad und einen elektronisch kommutierten Elektromotor zum Antreiben des Radialventilatorlaufrads verfügt und eine Ventilatorkennlinie aufweist, gemäß welcher der Radialventilator bei einem von dem Radialventilator geförderten bestimmten Volumenstrom eine bestimmte Druckdifferenz über den Radialventilator bewirkt, wobei bei einem Konstantbetrieb des Radialventilators mit wenigstens einem konstanten Betriebsparameter eine Konstantbetriebkennlinie vorliegt und sich bei einem minimalen Volumenstrom eine maximale Druckdifferenz und bei einer minimalen Druckdifferenz ein maximaler Volumenstrom ergibt, wobei als konstanter Betriebsparameter eine Leistungsaufnahme des Elektromotors und/oder eine Stromaufnahme des Elektromotors und/oder eine Drehzahl des Elektromotors und/oder ein Tastverhältnis zur pulsweitenmodulierten Ansteuerung des Radialventilators verwendet wird. Die Erfindung betrifft weiterhin ein Lüftungsgerät gemäß Anspruch 10.

Das Lüftungsgerät dient beispielsweise dem Lüften, insbesondere Entlüften und/oder Belüften, eines Raums, insbesondere eines Innenraums eines Gebäudes. Mithilfe des Lüftungsgeräts kann insoweit Luft aus dem Raum heraus oder in den Raum hineingefördert werden. Hierzu verfügt das Lüftungsgerät über den Radialventilator zum Fördern der Luft. Der Radialventilator ist insoweit zum Fördern von Luft aus dem Raum heraus oder alternativ zum Fördern von Luft in den Raum hinein ausgebildet beziehungsweise angeordnet. Der Radialventilator verfügt über das Radialventilatorlaufrad und den Elektromotor, wobei letzter dem Antreiben des Radialventilatorlaufrads dient. Der Elektromotor beziehungsweise eine Antriebswelle des Elektromotors ist entsprechend mit dem Radialventilatorlaufrad mechanisch gekoppelt, vorzugsweise starr und/oder permanent. Besonders bevorzugt sitzt das Radialventilatorlaufrad unmittelbar auf der Antriebswelle des Elektromotors beziehungsweise ist unmittelbar mit dieser gekoppelt. Das Radialventilatorlaufrad ist beispielsweise als Trommelläufer ausgestaltet. Auch andere Ausführungsformen des Radialventilatorlaufrads können jedoch realisiert sein.

Der Radialventilator verfügt über die Ventilatorkennlinie. Die Ventilatorkennlinie setzt den von dem Radialventilator geförderten Volumenstrom in Beziehung zu der von dem Radialventilator bewirkten Druckdifferenz. Die Druckdifferenz beschreibt hierbei die Differenz zwischen einem Druck unmittelbar stromabwärts des Radialventilators und einem Druck unmittelbar stromaufwärts des Radialventilators, jeweils bezogen auf den von dem Radialventilator geförderten Volumenstrom beziehungsweise Luftstrom. Unter dem Druck ist hierbei insbesondere der statische Druck zu verstehen. Je größer der Volumenstrom ist, umso kleiner ist die Druckdifferenz. Umgekehrt ist die Druckdifferenz umso größer, je kleiner der Volumenstrom ist.

Die Ventilatorkennlinie wird ermittelt, indem der Radialventilator bei unterschiedlichen Gegendrücken betrieben wird, also während eines Betriebs des Radialventilators unterschiedliche Gegendrücke eingestellt werden. Jedem Gegendruck entspricht eine Druckdifferenz über den Radialventilator, welcher wiederum ein von dem Radialventilator geförderter Volumenstrom zugeordnet werden kann. Insoweit ergibt sich insgesamt eine Ventilatorkennlinie, der bei einem minimalen Volumenstrom eine maximale Druckdifferenz und umgekehrt bei einer minimalen Druckdifferenz ein maximaler Volumenstrom zugeordnet werden kann. Die Ventilatorkennlinie wird bevorzugt unter Konstanthalten des wenigstens einen Betriebsparameters des Radialventilators ermittelt, sodass dieser als konstanter Betriebsparameter bezeichnet wird. Nachfolgend wird bei einer derartigen Betriebsweise des Radialventilators von dem Konstantbetrieb gesprochen.

Der Radialventilator wird vorzugsweise im Rahmen einer Pulsweitenmodulation angesteuert. Entsprechend wird zur Ansteuerung des Radialventilators ein Tastverhältnis ermittelt und an dem Radialventilator eingestellt beziehungsweise zum Ansteuern des Radialventilators herangezogen. Der Elektromotor des Radialventilators ist als elektronisch kommutierter Elektromotor ausgestaltet. Ein derartiger Elektromotor wird auch als bürstenloser Gleichstrommotor beziehungsweise EC-Motor bezeichnet. Im Falle der Ansteuerung des Radialventilators mithilfe der Pulsweitenmodulation wird der Konstantbetrieb des Radialventilators bevorzugt bei einem konstantem Tastverhältnis, beispielsweise bei maximalem Tastverhältnis, also insbesondere einem Tastverhältnis von 100 %, vorgenommen. Insoweit dient das Tastverhältnis als der wenigstens eine Betriebsparameter. Aufgrund des konstanten Tastverhältnisses bleibt die an dem Elektromotor zumindest zeitweise anliegende effektive Spannung konstant.

Aus dem Stand der Technik ist beispielsweise die Druckschrift DE 10 2007 017 682 A1 bekannt. Diese betrifft eine Anordnung mit einem Lüfter und einem zu dessen Antrieb dienenden elektronisch kommutierten Elektromotor, die eine Erfassungsvorrichtung zur Erfassung eines vom Lüfter erzeugten Luft-Volumenstroms und zur Erzeugung eines Volumenstrom-Messwerts, ferner eine Volumenstrom-Regelanordnung zur Regelung des vom Lüfter erzeugten Luft-Volumenstroms auf einen vorgegebenen Volumenstrom-Sollwert, wobei die Volumenstrom-Regelanordnung dazu ausgebildet ist, einen Drehzahl-Sollwert für den Elektromotor zu erzeugen, und einen Drehzahlregler zur Regelung der Drehzahl des Elektromotors auf den von der Volumenstrom-Regelanordnung erzeugten Drehzahl-Sollwert aufweist.

Weiterhin offenbart die Druckschrift DE 10 2013 204135 A1 eine Dunstabzugshaube mit einem elektronisch kommutierten Gebläsemotor und einer Steuereinrichtung, welche dazu eingerichtet ist, den Gebläsemotor mit einer ersten oder einer zweiten Drehmoment-Drehzahl-Kennlinie anzusteuern, wobei die die Drehmoment-Drehzahl-Kennlinien zumindest einen gemeinsamen Punkt aufweisen.

Zudem beschreibt die Druckschrift DE 101 41 124 A1 eine elektronisch kommutierte Gleichstrommaschine mit einem Rotor und einem Stator, mit einer Statorwicklungsanordnung, welche über eine Vollbrückenschaltung mit Strom aus einer Gleichstromquelle speisbar ist, welche Vollbrückenschaltung in jedem Brückenzweig einen oberen Halbleiterschalter, der mit einer positiven Leitung verbunden ist, und einen unteren Halbleiterschalter, der mit einer negativen Leitung verbunden ist, aufweist, mit einer Kommutierungsanordnung zum Kommutieren dieser Halbleiterschalter, welche Kommutierungsanordnung dazu ausgebildet ist, in Abhängigkeit zumindest von der Stellung des Rotors jeweils bei einem ersten Brückenzweig nur einen Halbleiterschalter einzuschalten und bei einem zweiten Brückenzweig, gesteuert durch ein Taktungssignal, einen dem eingeschalteten Halbleiterschalter des ersten Brückenzweigs zugeordneten Halbleiterschalter alternierend ein- und auszuschalten, und mit einer Anordnung, welche zur Erzeugung eines Taktungsvorgabesignals ausgebildet ist, welches durch seine Größe das Tastverhältnis für das alternierende Aus- und Einschalten des dem jeweils ersten Brückenzweig zugeordneten Halbleiterschalters steuert, ferner mit einer durch ein Strom-Sollwertsignal steuerbaren Strombegrenzungsanordnung, welche bei Erreichen eines durch das Strom-Sollwertsignal definierten Stromes in der Gleichstrommaschine das Taktvorgabesignal so modifiziert, dass der Strom in der Gleichstrommaschine nicht größer als ein Grenzstrom wird, welcher durch das Strom-Sollwertsignal bestimmt ist.

Ein weiteres Verfahren zum Betreiben eines Lüftungsgeräts ist in dem Fachartikel "Ventilatoren mit druck- und volumenstromkonstanter Regelung" (veröffentlicht in KI Luft- und Kältetechnik, Bd. 1-2, Januar 2005) beschrieben.

Es ist Aufgabe der Erfindung, ein Verfahren zum Betreiben eines Lüftungsgeräts vorzuschlagen, welches gegenüber bekannten Verfahren Vorteile aufweist, insbesondere einen geräuschreduzierten Betrieb des Lüftungsgeräts ermöglicht.

Dies wird erfindungsgemäß mit einem Verfahren mit den Merkmalen des Anspruchs 1 erreicht. Dabei ist vorgesehen, dass der Radialventilator in wenigstens einer Betriebsart durch eine Veränderung der Ventilatorkennlinie derart betrieben wird, dass die Ventilatorkennlinie von der Konstantbetriebkennlinie verschieden ist, sodass eine bei minimalem Volumenstrom vorliegende Grenzdruckdifferenz kleiner ist als die maximale Druckdifferenz, wobei bei einer Druckdifferenz zwischen der minimalen Druckdifferenz und einer Zwischendruckdifferenz ein von dem Radialventilator geförderter Istvolumenstrom unter Verwendung der Drehzahl des Elektromotors als Stellgröße auf einen Sollvolumenstrom geregelt wird und bei einer Druckdifferenz zwischen der Zwischendruckdifferenz und der maximalen Druckdifferenz mit ausgehend von der Zwischendruckdifferenz ansteigender Druckdifferenz die Drehzahl konstant gehalten oder verringert wird, damit die Grenzdruckdifferenz kleiner ist als die maximale Druckdifferenz.

Der Radialventilator steigert üblicherweise, insbesondere in dem Konstantbetrieb, seine Drehzahl ausgehend von einem bei maximalem Volumenstrom vorliegenden Freiblaspunkt bis zu einem bei minimalem Volumenstrom vorliegenden Volldrosselpunkt, nämlich insbesondere bis hin zu seiner maximalen Drehzahl. Dies geht jedoch mit zunehmender Geräuschbildung einher, was einem Benutzer des Lüftungsgeräts unangenehm auffallen kann, insbesondere wenn aufgrund der Drosselung des Radialventilators der momentan von dem Lüftungsgerät beziehungsweise dem Radialventilator geförderte Volumenstrom vergleichsweise gering ist. Wird also das Lüftungsgerät in einem ungünstigen Auslegungspunkt betrieben oder liegt eine falsche Steigstrang- und/oder Rohrdimensionierung vor, was zu einem zu großen Anlagenwiderstand führt, so nimmt der Benutzer ein "zu lautes" Lüftungsgerät wahr.

Weil der geförderte Volumenstrom in einem derartigen Betriebspunkt des Lüftungsgeräts ohnehin gering ist, soll die Geräuschbildung des Lüftungsgeräts minimiert werden. Dies wird durch eine Veränderung der Ventilatorkennlinie erzielt. Während im Rahmen des Konstantbetriebs eine bestimmte Konstantbetriebkennlinie vorliegt, soll in der wenigstens einen Betriebsart eine von dieser Konstantbetriebkennlinie verschiedene Kennlinie realisiert sein. Diese zeichnet sich dadurch aus, dass die Grenzdruckdifferenz, welche bei dem minimalen Volumenstrom vorliegt, kleiner ist als die vorstehend erwähnte maximale Druckdifferenz, welche für die Konstantbetriebkennlinie vorliegt.

Unter dem minimalen Volumenstrom wird üblicherweise der kleinstmögliche realisierbare Volumenstrom des Radialventilators verstanden, bevorzugt ein Volumenstrom von Null, was einer vollständigen Versperrung entspricht und üblicherweise im Volldrosselpunkt der Fall ist. In diesem Fall tritt die maximale Druckdifferenz auf. Analog wird unter der minimalen Druckdifferenz die kleinstmögliche Druckdifferenz verstanden, welche über den Radialventilator hinweg auftreten kann. Die Reduzierung der Grenzdruckdifferenz gegenüber der maximalen Druckdifferenz wird durch ein Konstanthalten bzw.
eine Reduzierung der Drehzahl des Radialventilators bewirkt, sodass analog auch die Geräuschbildung des Lüftungsgeräts reduziert wird. Die Kennlinie des Radialventilators ist also derart ausgestaltet, dass die Drehzahl des Radialventilators mit abnehmendem Volumenstrom beziehungsweise zunehmender Druckdifferenz konstant gehalten bzw. reduziert wird.
sodass der Anstieg der Druckdifferenz im Vergleich zu einem Betrieb mit der Konstantbetriebkennlinie reduziert ist. Beispielsweise wird die Drehzahl umso kleiner gewählt, je kleiner der Volumenstrom beziehungsweise je größer die Druckdifferenz wird.

Mithilfe des Radialventilators wird der Totaldruck der geförderten Luft erhöht, welcher sich aus dem statischen Druck und dem Staudruck beziehungsweise dynamischen Druck zusammensetzt. Der Totaldruck entspricht insoweit der Summe aus statischem Druck und dynamischem Druck. Bei kleinstmöglichem Gegendruck kann der Radialventilator ausschließlich eine Bewegung der Luft bewirken, also eine Erhöhung des dynamischen Drucks ohne eine Erhöhung des statischen Drucks. Die Druckdifferenz beschreibt nun die Differenz des statischen Drucks, also die Differenz zwischen dem statischen Druck unmittelbar stromabwärts des Radialventilators und dem statischen Druck unmittelbar stromaufwärts des Radialventilators. Insoweit ergibt sich bei minimaler Druckdifferenz, also idealerweise einer Druckdifferenz von Null oder von nahezu Null, der maximale Volumenstrom.

In einem ersten Bereich, und zwar bei einer Druckdifferenz zwischen der minimalen Druckdifferenz und einer Zwischendruckdifferenz, ist es vorgesehen, einen Sollvolumenstrom vorzugeben und den Radialventilator auf diesen regelnd einzustellen. Das Regeln kann auf Grundlage eines von dem Radialventilator tatsächlich geförderten Istvolumenstroms oder eines vergleichbaren Istwerts vorgenommen werden. Dieser kann zum Beispiel gemessen oder - alternativ - aus wenigstens einer anderen Größe abgeleitet beziehungsweise anhand dieser Größe berechnet werden, insbesondere aus der Leistungsaufnahme und/oder der Stromaufnahme des Elektromotors. Mit einer derartigen Vorgehensweise wird ausgehend von der minimalen Druckdifferenz mit ansteigender Druckdifferenz ein konstanter oder zumindest nahezu konstanter Volumenstrom erzielt, nämlich bis hin zu einer Zwischendruckdifferenz. In diesem Bereich verhindert der Radialventilator beziehungsweise die Steuerung und/oder Regelung des Radialventilators ein Absinken des Istvolumenstroms beziehungsweise des Istwerts normalerweise durch eine Erhöhung der Drehzahl. Ein derartiger Ausgleich ist bis zum Erreichen der Zwischendruckdifferenz möglich. Der in diesem Bereich vorliegende Volumenstrom kann als Haltevolumenstrom bezeichnet werden.

Steigt die Druckdifferenz ausgehend von der Zwischendruckdifferenz weiter an, so sinkt der Istvolumenstrom ab. Dies kann von der Steuerung und/oder Regelung nicht mehr unterbunden werden, weil eine maximal mögliche Drehzahl oder eine vorgegebene maximale Drehzahl bereits erreicht ist. Bei dem Überschreiten der Zwischendruckdifferenz wird mit ansteigender Druckdifferenz die Drehzahl reduziert bzw. konstant gehalten, sodass die Druckdifferenz nur bis zu der Grenzdruckdifferenz ansteigt und nicht bis zu der maximalen Druckdifferenz. Der Radialventilator wird also bei Überschreiten der Zwischendruckdifferenz in der wenigstens einen Betriebsart derart betrieben, dass die bei minimalem Volumenstrom vorliegende Grenzdruckdifferenz kleiner ist als die maximale Druckdifferenz.

Erfindungsgemäß wird also der Radialventilator in der wenigstens einen Betriebsart derart betrieben, dass bei einer Druckdifferenz zwischen einer minimalen Druckdifferenz und einer Zwischendruckdifferenz ein Istwert auf einen Sollwert geregelt wird, wobei der Istwert und der Sollwert als Volumenstrom und mithin als Istvolumenstrom und Sollvolumenstrom vorliegen. Als Stellgröße wird die Drehzahl des Radialventilators beziehungsweise des Elektromotors verwendet. Bei einer Druckdifferenz zwischen der Zwischendruckdifferenz und der maximalen Druckdifferenz soll mit ausgehend von der Zwischendruckdifferenz ansteigender Druckdifferenz die Drehzahl konstant gehalten oder verringert werden, damit eine Grenzdruckdifferenz realisiert ist, die kleiner ist als die maximale Druckdifferenz. Beispielsweise wird als ausgehend von der Zwischendruckdifferenz die Drehzahl umso kleiner gewählt, je größer die Druckdifferenz ist.

Eine bevorzugte Ausgestaltung der Erfindung sieht vor, dass ein Tastverhältnis für eine pulsweitenmodulierte Ansteuerung des Radialventilators im Rahmen einer Regelung ermittelt wird. Die Regelung wird derart durchgeführt, dass die jeweils gewünschte Kennlinie des Radialventilators erzielt wird. Als Eingangsgrößen für die Regelung können grundsätzlich beliebige Betriebsparameter herangezogen werden. Als Ausgangsgröße der Regelung ergibt sich zumindest das Tastverhältnis für die pulsweitenmodulierte Ansteuerung des Radialventilators beziehungsweise des Elektromotors.

Gemäß der Erfindung ist vorgesehen, dass wenigstens eine der nachfolgenden Größen als konstanter Betriebsparameter verwendet wird: Leistungsaufnahme des Elektromotors, Stromaufnahme des Elektromotors, Drehzahl des Elektromotors und/oder das Tastverhältnis zur pulsweitenmodulierten Ansteuerung des Radialventilators. Zusätzlich kann vorgesehen sein, dass wenigstens eine der nachfolgenden Größen als Eingangsgröße für die Regelung verwendet wird: die Leistungsaufnahme des Elektromotors, die Stromaufnahme des Elektromotors, die Drehzahl des Elektromotors und/oder das Tastverhältnis zur pulsweitenmodulierten Ansteuerung des Radialventilators. Es wird zumindest eine der genannten Größen verwendet. Bevorzugt werden jedoch mehrere herangezogen. Eine oder mehrere der genannten Größen werden auch als Betriebsparameter für den Konstantbetrieb des Radialventilators verwendet. Dies ist besonders bevorzugt das Tastverhältnis. Beispielsweise wird der Radialventilator während des Konstantbetriebs mit maximalem Tastverhältnis, also insbesondere einem Tastverhältnis von 100 %, betrieben.

Eine Weiterbildung der Erfindung sieht vor, dass die Grenzdruckdifferenz höchstens 80 %, höchstens 75 %, höchstens 70 %, höchstens 65 %, höchstens 60 %, höchstens 55 % oder höchstens 50 % der maximalen Druckdifferenz beträgt. Gegenüber der Konstantbetriebkennlinie ist die Kennlinie in der wenigstens einen Betriebsart insoweit hinsichtlich der höchsten erreichbaren Druckdifferenz deutlich beschränkt. Besonders bevorzugt beträgt die Grenzdruckdifferenz bezogen auf die maximale Druckdifferenz mindestens 25 %, mindestens 30 %, mindestens 40 %, mindestens 45 % oder mindestens 50 %. Besonders bevorzugt liegt die Grenzdruckdifferenz bezogen auf die maximale Druckdifferenz zwischen 50 % und 60 %, diese Werte jeweils einschließend.

Eine weitere bevorzugte Ausgestaltung der Erfindung sieht vor, dass der Radialventilator derart betrieben wird, dass mit ausgehend von der Grenzdruckdifferenz abnehmender Druckdifferenz der Volumenstrom bis zu einem bei einer Zwischendruckdifferenz erreichten Haltevolumenstrom zunimmt und bei ausgehend von der Zwischendruckdifferenz weiter abnehmender Druckdifferenz konstant bleibt. Dieses Verhalten ist ebenfalls in der wenigstens einen Betriebsart realisiert. Die bei dem Konstantbetrieb des Radialventilators realisierte Konstantbetriebkennlinie weist üblicherweise einen mit stetig abnehmender Druckdifferenz stetig zunehmenden Volumenstrom auf.

Von dieser Konstantbetriebkennlinie soll nun abgewichen werden, indem der Volumenstrom mit abnehmender Druckdifferenz lediglich bis zu dem Haltevolumenstrom zunimmt und anschließend im Wesentlichen konstant bleibt. Hierunter ist zu verstehen, dass sich der Volumenstrom bei ausgehend von der Zwischendruckdifferenz weiter abnehmenden Druckdifferenz bis zum Erreichen der minimalen Druckdifferenz nicht oder allenfalls geringfügig ändert, beispielsweise um maximal 10 % oder weniger. Die Zwischendruckdifferenz ist von der minimalen Druckdifferenz verschieden, insbesondere ist sie deutlich größer als diese. Beispielsweise beträgt die Zwischendruckdifferenz mindestens 10 %, mindestens 20 %, mindestens 30 %, mindestens 40 % oder mindestens 50 % der maximalen Druckdifferenz.

Besonders bevorzugt ändert sich der Volumenstrom ab der Zwischendruckdifferenz bis hin zu der minimalen Druckdifferenz nahezu überhaupt nicht, beispielsweise um maximal 5 %, maximal 2 % oder maximal 1 %. Durch eine derartige Anpassung der Kennlinie in der wenigstens einen Betriebsart wird verhindert, dass ein zu weit von einem Auslegungsvolumenstrom abweichender Volumenstrom auftritt. Vielmehr wird der in der wenigstens einen Betriebsart höchste Volumenstrom auf den Haltevolumenstrom begrenzt.

In anderen Worten ist es bevorzugt vorgesehen, einen Sollvolumenstrom vorzugeben und den Radialventilator auf diesen einzustellen, insbesondere steuernd und/oder regelnd, vorzugsweise letzteres. Das Einstellen, insbesondere das Regeln, kann auf Grundlage eines von dem Radialventilator tatsächlich geförderten Istvolumenstroms vorgenommen werden, welcher entweder gemessen oder aus anderen Größen abgeleitet beziehungsweise anhand dieser Größen abgeschätzt wird. Mit einer derartigen Vorgehensweise wird ausgehend von der minimalen Druckdifferenz mit ansteigender Druckdifferenz der konstante Volumenstrom erzielt, der dem Haltevolumenstrom entspricht, nämlich bis hin zu der Zwischendruckdifferenz. In diesem Bereich verhindert der Radialventilator beziehungsweise die Steuerung und/oder Regelung des Radialventilators ein Absinken des Istvolumenstroms normalerweise durch eine Erhöhung der Drehzahl.

Bei ausgehend von der Zwischendruckdifferenz ansteigender Druckdifferenz sinkt der Volumenstrom beziehungsweise Istvolumenstrom ab. Dies wird von der Steuerung und/oder Regelung nicht mehr unterbunden, weil eine maximal mögliche Drehzahl oder eine vorgegebene maximale Drehzahl üblicherweise bereits erreicht ist. Bei dem Überschreiten der Zwischendruckdifferenz soll nun mit ansteigender Druckdifferenz die Drehzahl reduziert werden, sodass die Druckdifferenz nur bis zu der Grenzdruckdifferenz ansteigt und nicht bis zu der maximalen Druckdifferenz. Der Radialventilator wird also bei Überschreiten der Zwischendruckdifferenz in der wenigstens einen Betriebsart derart betrieben, dass die bei minimalem Volumenstrom vorliegende Grenzdruckdifferenz kleiner ist als die maximale Druckdifferenz.

Eine weitere Ausführungsform der Erfindung sieht vor, dass die Grenzdruckdifferenz um einen Faktor von mindestens 2,0, mindestens 2,25, mindestens 2,5, mindestens 2,75 oder mindestens 3,0 größer ist als die Zwischendruckdifferenz. Die Grenzdruckdifferenz, welche bei dem minimalen Volumenstrom in der wenigstens einen Betriebsart vorliegt, soll also deutlich größer sein als die Zwischendruckdifferenz, bei welcher der Haltevolumenstrom vorliegt. Anders ausgedrückt ist die Zwischendruckdifferenz die größte Druckdifferenz, bei welcher der Volumenstrom noch dem Haltevolumenstrom entspricht beziehungsweise zumindest innerhalb der vorstehend genannten Grenzen entspricht.

Im Rahmen einer weiteren Ausgestaltung der Erfindung ist vorgesehen, dass sich bei der minimalen Druckdifferenz ein Grenzvolumenstrom einstellt, wobei der Haltevolumenstrom mindestens 90 %, vorzugsweise mindestens 95 %, mindestens 98 % oder mindestens 99 %, des Grenzvolumenstroms entspricht. Die minimale Druckdifferenz wird auch in der wenigstens einen Betriebsart erreicht. Insbesondere entspricht die minimale Druckdifferenz in der wenigstens einen Betriebsart der minimalen Druckdifferenz in dem Konstantbetrieb des Radialventilators. Bei der minimalen Druckdifferenz stellt sich in jedem Fall der Grenzvolumenstrom ein, welcher für die wenigstens eine Betriebsart und den Konstantbetrieb vorzugsweise verschieden ist. Der Haltevolumenstrom weicht lediglich geringfügig von diesem Grenzvolumenstrom ab, wie bereits vorstehend erläutert wurde. Bezogen auf den Grenzvolumenstrom entspricht der Haltevolumenstrom vorzugsweise mindestens einem der genannten Werte, sodass umgekehrt die Abweichung des Haltevolumenstroms von dem Grenzvolumenstrom höchstens 10 %, höchstens 5 %, höchstens 2 % oder höchstens 1 % beträgt. Besonders bevorzugt entspricht der Haltevolumenstrom dem Grenzvolumenstrom exakt.

Eine bevorzugte Ausführungsform der Erfindung sieht vor, dass der Radialventilator derart betrieben wird, dass der Grenzvolumenstrom kleiner ist als der maximale Volumenstrom, insbesondere höchstens 60 %, höchstens 50 %, höchstens 40 %, höchstens 30 % oder höchstens 20 % des maximalen Volumenstroms beträgt. Auch ein derartiger Betrieb des Radialventilators ist bevorzugt in der wenigstens einen Betriebsart, insbesondere ausschließlich in der wenigstens einen Betriebsart vorgesehen. Auf die Gründe für einen derartigen Betrieb des Radialventilators wurde vorstehend bereits hingewiesen. Insbesondere soll ein zu starkes Abweichen von dem Auslegungsvolumenstrom beziehungsweise ein zu starkes Überschreiten des Auslegungsvolumenstroms verhindert werden. Entsprechend wird der Grenzvolumenstrom bezogen auf den maximalen Volumenstrom deutlich begrenzt, bevorzugt auf wenigstens einen der genannten Werte.

Schließlich kann im Rahmen einer weiteren bevorzugten Ausführungsform der Erfindung vorgesehen sein, dass in einer weiteren Betriebsart der Grenzvolumenstrom dem maximalen Volumenstrom und/oder die Grenzdruckdifferenz der maximalen Druckdifferenz entspricht. Die vorstehend in der wenigstens einen Betriebsart vorgesehenen Beschränkungen können in der weiteren Betriebsart entfallen. Beispielsweise entspricht in der weiteren Betriebsart der Grenzvolumenstrom dem maximalen Volumenstrom, wohingegen die Grenzdruckdifferenz weiterhin kleiner ist als die maximale Druckdifferenz. Umgekehrt kann es in der weiteren Betriebsart vorgesehen sein, dass die Grenzdruckdifferenz kleiner ist als die maximale Druckdifferenz, der Grenzvolumenstrom jedoch dem maximalen Volumenstrom entspricht. Treffen eine oder mehrere der Beschränkungen zu, so wird auf die vorstehenden entsprechenden Ausführungen jeweils verwiesen, welche ergänzend herangezogen werden können.

Es kann auch vorgesehen sein, dass die wenigstens eine Betriebsart als erste Betriebsart bezeichnet wird, in welcher also die bei minimalem Volumenstrom vorliegende Grenzdruckdifferenz kleiner ist als die maximale Druckdifferenz. Zugleich ist der Grenzvolumenstrom kleiner als der maximale Volumenstrom. In einer zweiten Betriebsart soll dagegen die Grenzdruckdifferenz der maximalen Druckdifferenz entsprechen, jedoch der Grenzvolumenstrom kleiner sein als der maximale Volumenstrom. In einer dritten Betriebsart schließlich entspricht der Grenzvolumenstrom dem maximalen Volumenstrom und die Grenzdruckdifferenz der maximalen Druckdifferenz. Das Lüftungsgerät wird nun in einer der genannten Betriebsarten betrieben. Hierzu wird die Betriebsart an dem Lüftungsgerät eingestellt. Besonders bevorzugt kann der Benutzer des Lüftungsgeräts die durchzuführende Betriebsart aus den genannten Betriebsarten auswählen und an dem Lüftungsgerät einstellen. Hierzu sind beispielsweise entsprechende Eingabemittel an dem Lüftungsgerät vorgesehen.

Selbstverständlich kann es in der wenigstens einen Betriebsart beziehungsweise in der ersten Betriebsart vorgesehen sein, dass mehrere Unterbetriebsarten realisiert sind, welche sich hinsichtlich der Grenzdruckdifferenz und/oder des Grenzvolumenstroms unterscheiden. Beispielsweise weist also die erste Betriebsart wenigstens zwei Unterbetriebsarten auf, wobei bei einer der Unterbetriebsarten die Grenzdruckdifferenz und der Grenzvolumenstrom jeweils kleiner sind als in einer anderen der Unterbetriebsarten.

Die Erfindung betrifft weiterhin ein Lüftungsgerät, insbesondere zur Durchführung des Verfahrens gemäß den vorstehenden Ausführungen, wobei das Lüftungsgerät einen Radialventilator zum Fördern von Luft aufweist, der über ein Radialventilatorlaufrad und einen elektronisch kommutierten Elektromotor zum Antreiben des Radialventilatorlaufrads verfügt und eine bestimmte Ventilatorkennlinie aufweist, gemäß welcher der Radialventilator bei einem von dem Radialventilator geförderten bestimmten Volumenstrom eine bestimmte Druckdifferenz über den Radialventilator bewirkt, wobei bei einem Konstantbetrieb des Radialventilators mit wenigstens einem konstanten Betriebsparameter eine Konstantbetriebkennlinie vorliegt und sich bei einem minimalen Volumenstrom eine maximale Druckdifferenz und bei einer minimalen Druckdifferenz ein maximaler Volumenstrom ergibt, wobei als konstanter Betriebsparameter eine Leistungsaufnahme des Elektromotors und/oder eine Stromaufnahme des Elektromotors und/oder eine Drehzahl des Elektromotors und/oder ein Tastverhältnis zur pulsweitenmodulierten Ansteuerung des Radialventilators verwendet wird. Dabei ist vorgesehen, dass das Lüftungsgerät dazu ausgebildet ist, den Radialventilator in wenigstens einer Betriebsart durch eine Veränderung der Ventilatorkennlinie derart zu betreiben, dass die Ventilatorkennlinie von der Konstantbetriebkennlinie verschieden ist, sodass eine bei minimalem Volumenstrom vorliegende Grenzdruckdifferenz kleiner ist als die maximale Druckdifferenz, wobei bei einer Druckdifferenz zwischen der minimalen Druckdifferenz und einer Zwischendruckdifferenz ein von dem Radialventilator geförderter Istvolumenstrom unter Verwendung der Drehzahl des Elektromotors als Stellgröße auf einen Sollvolumenstrom geregelt wird und bei einer Druckdifferenz zwischen der Zwischendruckdifferenz und der maximalen Druckdifferenz mit ausgehend von der Zwischendruckdifferenz ansteigender Druckdifferenz die Drehzahl konstant gehalten oder verringert wird, damit die Grenzdruckdifferenz kleiner ist als die maximale Druckdifferenz.

Auf die Vorteile einer derartigen Ausgestaltung des Lüftungsgeräts beziehungsweise der entsprechenden Vorgehensweise wurde bereits hingewiesen. Sowohl das Lüftungsgerät als auch das Verfahren zu seinem Betreiben können gemäß den vorstehenden Ausführungen weitergebildet sein, sodass insoweit auf diese verwiesen wird.

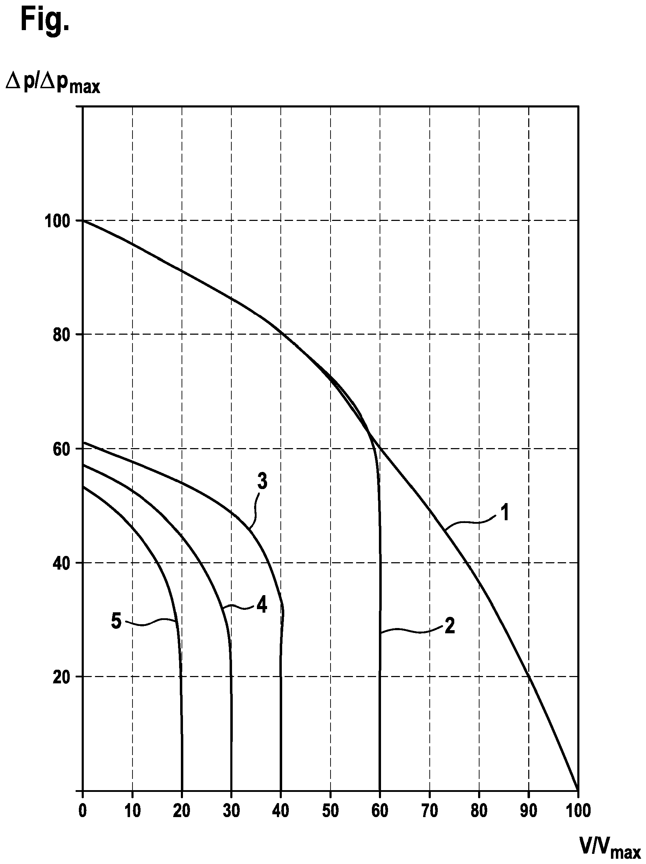

Die Erfindung wird nachfolgend anhand der in der Zeichnung dargestellten Ausführungsbeispiele näher erläutert, ohne dass eine Beschränkung der Erfindung erfolgt. Dabei zeigt die einzige

Figur ein Diagramm, in welchem unterschiedliche Kennlinien eines Radialventilators eines Lüftungsgeräts dargestellt sind.

Die Figur zeigt ein Diagramm, in welchem mehrere Kennlinien 1, 2, 3, 4 und 5 für einen Radialventilator dargestellt sind, welcher im Rahmen eines Lüftungsgeräts eingesetzt wird. Das Lüftungsgerät dient hierbei dem Lüften, bevorzugt dem Entlüften und/oder Belüften, eines Raums, insbesondere eines Innenraums eines Gebäudes. Die Kennlinien beschreiben eine Druckdifferenz Δp bezogen auf eine maximale Druckdifferenz Δpₘₐₓ über einen Volumenstrom V bezogen auf einen maximalen Volumenstrom Vₘₐₓ beziehungsweise umgekehrt. Unter der Druckdifferenz Δp wird hierbei die Differenz zwischen dem statischen Druck unmittelbar stromabwärts des Radialventilators zu dem statischen Druck unmittelbar stromaufwärts des Radialventilators verstanden. Der Volumenstrom V ist der von dem Radialventilator geförderte Volumenstrom. Die Druckdifferenz Δp ist auf die maximale Druckdifferenz Δpₘₐₓ bezogen, welche üblicherweise bei minimalem Volumenstrom auftritt. Umgekehrt ist der Volumenstrom V auf den maximalen Volumenstrom Vₘₐₓ bezogen, der bei minimaler Druckdifferenz auftritt.

Die Kennlinie 1 entspricht einer Kennlinie des Radialventilators bei einem Konstantbetrieb mit wenigstens einem konstanten Betriebsparameter. Der Betriebsparameter ist beispielsweise ein Tastverhältnis zur pulsweitenmodulierten Ansteuerung des Radialventilators. Bevorzugt wird der Radialventilator in dem Konstantbetrieb mit einem Tastverhältnis von 100 % bei gleichzeitig konstanter Betriebsspannung des Radialventilators betrieben, sodass sich eine gleichbleibende effektive Spannung für den Betrieb des Radialventilators ergibt. Die Kennlinie 1 zeigt deutlich, dass in dem Konstantbetrieb des Radialventilators sich der Volumenstrom V ausgehend von einer maximalen Druckdifferenz Δpₘₐₓ mit kleiner werdender Druckdifferenz Δp kontinuierlich vergrößert, bis bei minimaler Druckdifferenz der maximale Volumenstrom Vₘₐₓ vorliegt.

Die Kennlinie 2 ist gegenüber der Kennlinie 1 modifiziert. Hier wird nun der Radialventilator derart betrieben, dass mit ausgehend von der maximalen Druckdifferenz Δpₘₐₓ abnehmender Druckdifferenz Δp der Volumenstrom V bis zu einem bei einer Zwischendruckdifferenz erreichten Haltevolumenstrom zunimmt und bei ausgehend von der Zwischendruckdifferenz weiter abnehmender Druckdifferenz Δp konstant bleibt. Hierbei ist der Grenzvolumenstrom kleiner als der maximale Volumenstrom Vₘₐₓ, welcher für die Kennlinie 1 vorliegt. In dem hier dargestellten Ausführungsbeispiel beträgt der Grenzvolumenstrom der Kennlinie 2 etwa 60 % des maximalen Volumenstroms Vₘₐₓ.

Die Kennlinien 3, 4 und 5 entsprechen jeweils dem Betrieb mit einer erfindungsgemäßen Betriebsart. Sie zeigen jeweils ein ähnliches Verhalten auf, sodass sie nachfolgend gemeinsam beschrieben werden. Die Kennlinien 3, 4 und 5 resultieren aus einem Betrieb des Radialventilators derart, dass eine bei minimalem Volumenstrom vorliegende Grenzdruckdifferenz kleiner ist als die maximale Druckdifferenz Δpₘₐₓ. Zusätzlich wird der Radialventilator - analog zu der Kennlinie 2 - derart betrieben, dass mit ausgehend von der Grenzdruckdifferenz abnehmender Druckdifferenz Δp der Volumenstrom V bis zu einem bei einer Zwischendruckdifferenz erreichten Haltevolumenstrom zunimmt und bei ausgehend von der Zwischendruckdifferenz weiter abnehmender Druckdifferenz Δp konstant bleibt.

Die Kennlinien 3, 4 und 5 unterscheiden sich nun hinsichtlich der Grenzdruckdifferenz und dem Haltevolumenstrom. Insbesondere sind die Grenzdruckdifferenz und der Haltevolumenstrom der Kennlinie 4 jeweils kleiner als für die Kennlinie 3. Für die Kennlinie 5 gilt bezüglich der Kennlinie 4 entsprechendes. Für die Kennlinie 3 gilt beispielsweise, dass die Grenzdruckdifferenz bezogen auf die maximale Druckdifferenz Δpₘₐₓ höchstens etwa 60 %, beispielsweise höchstens 62 %, beträgt. Für die Kennlinie 4 beträgt die Grenzdruckdifferenz beispielsweise höchstens 58 % und für die Kennlinie 5 höchstens 54 %. Zusätzlich oder alternativ entspricht der Haltevolumenstrom bezogen auf den maximalen Volumenstrom Vₘₐₓ für die Kennlinie 3 höchstens 40 %, für die Kennlinie 4 höchstens 30 % und für die Kennlinie 5 höchstens 20 %. Die genannten Werte sind jedoch rein beispielhaft und dienen lediglich der Illustration.

Es ist nun erfindungsgemäß vorgesehen, eine der Kennlinien 3, 4 und 5 im Rahmen einer ersten Betriebsart des Lüftungsgeräts beziehungsweise des Radialventilators heranzuziehen. Die Kennlinie 2 wird hingegen im Rahmen einer zweiten Betriebsart und die Kennlinie 1 im Rahmen einer dritten Betriebsart umgesetzt. Die erste Betriebsart kann in mehrere Unterbetriebsarten unterteilt werden, wobei in dem hier dargestellten Ausführungsbeispiel in jeder der Unterbetriebsart eine der Kennlinien 3, 4 und 5 realisiert ist. Insoweit ermöglicht das Lüftungsgerät schlussendlich das Einstellen einer aus fünf Betriebsarten ausgewählten Betriebsart, wobei in jeder der Betriebsarten genau eine der Kennlinien 1, 2, 3, 4 und 5 umgesetzt wird. Selbstverständlich kann das Lüftungsgerät jedoch auch zur Realisierung einer größeren Anzahl an Betriebsarten oder einer kleineren Anzahl an Betriebsarten ausgestaltet sein.

Die Kennlinie 1 ermöglicht das Betreiben des Lüftungsgeräts bei maximaler Leistung, sodass also sowohl die maximale Druckdifferenz Δpₘₐₓ als auch der maximale Volumenstrom Vₘₐₓ erreicht werden können. Die Kennlinie 2 wird hingegen bevorzugt in einer Komfortbetriebsart des Lüftungsgeräts umgesetzt, bei welcher der höchste erreichbare Volumenstrom gegenüber dem maximalen Volumenstrom reduziert werden soll, um ein zu starkes Überschreiten eines Auslegungsvolumenstroms zu verhindern. Die Kennlinien 3, 4 und 5 beziehungsweise eine dieser Kennlinien werden für einen geräuschreduzierten Betrieb des Lüftungsgeräts verwendet. Durch die gegenüber der maximalen Druckdifferenz reduzierten Grenzdruckdifferenz wird eine Drehzahlreduzierung des Radialventilators gegenüber dem Konstantbetrieb bei gleichem Volumenstrom V realisiert, woraus sich die Reduzierung der Geräuschbildung des Lüftungsgeräts ergibt.

Das beschriebene Lüftungsgerät ist insoweit äußerst flexibel einsetzbar und ermöglicht sowohl einen Betrieb mit hoher Leistung als auch einen Komfortbetrieb sowie einen geräuschreduzierten Betrieb.

## Patentansprüche

1. Verfahren zum Betreiben eines Lüftungsgeräts, wobei das Lüftungsgerät einen Radialventilator zum Fördern von Luft aufweist, der über ein Radialventilatorlaufrad und einen elektronisch kommutierten Elektromotor zum Antreiben des Radialventilatorlaufrads verfügt und eine Ventilatorkennlinie (1,2,3,4,5) aufweist, gemäß welcher der Radialventilator bei einem von dem Radialventilator geförderten bestimmten Volumenstrom (V) eine bestimmte Druckdifferenz (Δp) über den Radialventilator bewirkt, wobei bei einem Konstantbetrieb des Radialventilators mit wenigstens einem konstanten Betriebsparameter eine Konstantbetriebkennlinie (1) vorliegt und sich bei einem minimalen Volumenstrom eine maximale Druckdifferenz (Δpₘₐₓ) und bei einer minimalen Druckdifferenz ein maximaler Volumenstrom (Vₘₐₓ) ergibt, wobei als konstanter Betriebsparameter eine Leistungsaufnahme des Elektromotors und/oder eine Stromaufnahme des Elektromotors und/oder eine Drehzahl des Elektromotors und/oder ein Tastverhältnis zur pulsweitenmodulierten Ansteuerung des Radialventilators verwendet wird, wobei der Radialventilator in wenigstens einer Betriebsart durch eine Veränderung der Ventilatorkennlinie derart betrieben wird, dass die Ventilatorkennlinie (3, 4, 5) von der Konstantbetriebkennlinie verschieden ist, sodass eine bei minimalem Volumenstrom vorliegende Grenzdruckdifferenz kleiner ist als die maximale Druckdifferenz (Δₚₘₐₓ), **dadurch gekennzeichnet, dass** in der wenigstens einen Betriebsart bei einer Druckdifferenz zwischen der minimalen Druckdifferenz und einer Zwischendruckdifferenz ein von dem Radialventilator geförderter Istvolumenstrom unter Verwendung der Drehzahl des Elektromotors als Stellgröße auf einen Sollvolumenstrom geregelt wird und bei einer Druckdifferenz zwischen der Zwischendruckdifferenz und der maximalen Druckdifferenz mit ausgehend von der Zwischendruckdifferenz ansteigender Druckdifferenz die Drehzahl konstant gehalten oder verringert wird, damit die Grenzdruckdifferenz kleiner ist als die maximale Druckdifferenz.

2. Verfahren nach Anspruch 1, **dadurch gekennzeichnet, dass** ein Tastverhältnis für eine pulsweitenmodulierte Ansteuerung des Radialventilators im Rahmen einer Regelung ermittelt wird.

3. Verfahren nach Anspruch 2, **dadurch gekennzeichnet, dass** wenigstens eine der nachfolgenden Größen als Eingangsgröße für die Regelung verwendet wird: die Leistungsaufnahme des Elektromotors, die Stromaufnahme des Elektromotors, die Drehzahl des Elektromotors und/oder das Tastverhältnis zur pulsweitenmodulierten Ansteuerung des Radialventilators.

4. Verfahren nach einem der vorhergehenden Ansprüche, **dadurch gekennzeichnet, dass** die Grenzdruckdifferenz höchstens 80 %, höchstens 75 %, höchstens 70 %, höchstens 65 %, höchstens 60 %, höchstens 55 % oder höchstens 50 % der maximalen Druckdifferenz (Δpₘₐₓ) beträgt.

5. Verfahren nach einem der vorhergehenden Ansprüche, **dadurch gekennzeichnet, dass** der Radialventilator derart betrieben wird, dass mit ausgehend von der Grenzdruckdifferenz abnehmender Druckdifferenz (Δp) der Volumenstrom (V) bis zu einem bei der Zwischendruckdifferenz erreichten Haltevolumenstrom zunimmt und bei ausgehend von der Zwischendruckdifferenz weiter abnehmender Druckdifferenz (Δp) konstant bleibt.

6. Verfahren nach einem der vorhergehenden Ansprüche, **dadurch gekennzeichnet, dass** die Grenzdruckdifferenz um einen Faktor von mindestens 2,0, mindestens 2,25, mindestens 2,5, mindestens 2,75 oder mindestens 3,0 größer ist als die Zwischendruckdifferenz.

7. Verfahren nach einem der vorhergehenden Ansprüche, **dadurch gekennzeichnet, dass** sich bei der minimalen Druckdifferenz ein Grenzvolumenstrom einstellt, wobei ein bei der Zwischendruckdifferenz erreichter Haltevolumenstrom mindestens 90 %, vorzugsweise mindestens 95 %, mindestens 98 % oder mindestens 99 %, des Grenzvolumenstroms, entspricht.

8. Verfahren nach einem der vorhergehenden Ansprüche, **dadurch gekennzeichnet, dass** der Radialventilator derart betrieben wird, dass ein Grenzvolumenstrom kleiner ist als der maximale Volumenstrom (Vₘₐₓ), insbesondere höchstens 60 %, höchstens 50 %, höchstens 40 %, höchstens 30 % oder höchstens 20 % des maximalen Volumenstroms (Vₘₐₓ) beträgt.

9. Verfahren nach einem der vorhergehenden Ansprüche, **dadurch gekennzeichnet, dass** in einer weiteren Betriebsart ein Grenzvolumenstrom dem maximalen Volumenstrom (V') und/oder die Grenzdruckdifferenz der maximalen Druckdifferenz (Δpₘₐₓ) entspricht.

10. Lüftungsgerät, insbesondere zur Durchführung des Verfahrens nach einem oder mehreren der vorhergehenden Ansprüche, wobei das Lüftungsgerät einen Radialventilator zum Fördern von Luft aufweist, der über ein Radialventilatorlaufrad und einen elektronisch kommutierten Elektromotor zum Antreiben des Radialventilatorlaufrads verfügt und eine bestimmte Ventilatorkennlinie (1,2,3,4,5) aufweist, gemäß welcher der Radialventilator bei einem von dem Radialventilator geförderten bestimmten Volumenstrom (V) eine bestimmte Druckdifferenz (Δp) über den Radialventilator bewirkt, wobei bei einem Konstantbetrieb des Radialventilators mit wenigstens einem konstanten Betriebsparameter eine Konstantbetriebkennlinie (1) vorliegt und sich bei einem minimalen Volumenstrom eine maximale Druckdifferenz (Δpₘₐₓ) und bei einer minimalen Druckdifferenz ein maximaler Volumenstrom (Vₘₐₓ) ergibt, wobei als konstanter Betriebsparameter eine Leistungsaufnahme des Elektromotors und/oder eine Stromaufnahme des Elektromotors und/oder eine Drehzahl des Elektromotors und/oder ein Tastverhältnis zur pulsweitenmodulierten Ansteuerung des Radialventilators verwendet wird, wobei das Lüftungsgerät dazu ausgebildet ist, den Radialventilator in wenigstens einer Betriebsart durch eine Veränderung der Ventilatorkennlinie derart zu betreiben, dass die Ventilatorkennlinie (3, 4, 5) von der Konstantbetriebkennlinie verschieden ist, sodass eine bei minimalem Volumenstrom vorliegende Grenzdruckdifferenz kleiner ist als die maximale Druckdifferenz (Δpₘₐₓ), **dadurch gekennzeichnet, dass** das Lüftungsgerät derart ausgebildet ist, dass in der wenigstens einen Betriebsart bei einer Druckdifferenz zwischen der minimalen Druckdifferenz und einer Zwischendruckdifferenz ein von dem Radialventilator geförderter Istvolumenstrom unter Verwendung der Drehzahl des Elektromotors als Stellgröße auf einen Sollvolumenstrom geregelt wird und bei einer Druckdifferenz zwischen der Zwischendruckdifferenz und der maximalen Druckdifferenz mit ausgehend von der Zwischendruckdifferenz ansteigender Druckdifferenz die Drehzahl konstant gehalten oder verringert wird, damit die Grenzdruckdifferenz kleiner ist als die maximale Druckdifferenz.

## Claims

1. Method for operating a ventilation device, the ventilation device having a radial fan for conveying air, which has a radial fan rotor and an electronically commutated electric motor for driving the radial fan rotor and has a fan characteristic curve (1, 2, 3, 4, 5) according to which the radial fan effects a specific pressure difference (Δp) across the radial fan at a specific volumetric flow (V) conveyed by the radial fan, wherein in constant operation of the radial fan with at least one constant operating parameter a constant operation characteristic curve (1) is present and a maximum pressure difference (Δpₘₐₓ) results at a minimum volumetric flow and a maximum volumetric flow (Vₘₐₓ) results at a minimum pressure difference, wherein a power consumption of the electric motor and/or a current consumption of the electric motor and/or a rotational speed of the electric motor and/or a duty cycle for pulse-width modulated control of the radial fan is used as the constant operating parameter, the radial fan being operated in at least one operating mode by changing the fan characteristic curve in such a way that the fan characteristic curve (3, 4, 5) differs from the constant operation characteristic curve, so that a limiting pressure difference which is present at minimum volumetric flow is smaller than the maximum pressure difference (Δₚₘₐₓ), **characterized in that**, in the at least one operating mode, in the case of a pressure difference between the minimum pressure difference and an intermediate pressure difference, an actual volumetric flow conveyed by the radial fan is regulated to a setpoint volumetric flow using the rotational speed of the electric motor as a control variable and, in the case of a pressure difference between the intermediate pressure difference and the maximum pressure difference, with the pressure difference increasing starting from the intermediate pressure difference, the rotational speed is kept constant or is reduced so that the limiting pressure difference is smaller than the maximum pressure difference.

2. Method according to claim 1, **characterised in that** a duty cycle for a pulse-width modulated control of the radial fan is determined within the scope of a loop control.

3. Method according to claim 2, **characterised in that** at least one of the following variables is used as an input variable for the loop control: the power consumption of the electric motor, the current consumption of the electric motor, the rotational speed of the electric motor and/or the duty cycle for pulse-width modulated control of the radial fan.

4. Method according to any one of the preceding claims, **characterized in that** the limiting pressure difference is at most 80 %, at most 75 %, at most 70 %, at most 65 %, at most 60 %, at most 55 % or at most 50 % of the maximum pressure difference (Δpₘₐₓ).

5. Method according to any one of the preceding claims, **characterised in that** the radial fan is operated in such a way that with a pressure difference (Δp) decreasing starting from the limiting pressure difference, the volumetric flow (V) increases up to a holding volumetric flow reached at the intermediate pressure difference and remains constant with a further decreasing pressure difference (Δp) starting from the intermediate pressure difference.

6. Method according to any one of the preceding claims, **characterized in that** the limiting pressure difference is greater than the intermediate pressure difference by a factor of at least 2.0, at least 2.25, at least 2.5, at least 2.75 or at least 3.0.

7. Method according to any one of the preceding claims, **characterised in that** a limiting volumetric flow is established at the minimum pressure difference, wherein a holding volumetric flow achieved at the intermediate pressure difference corresponds to at least 90%, preferably at least 95%, at least 98% or at least 99%, of the limiting volumetric flow.

8. Method according to one of the preceding claims, **characterized in that** the radial fan is operated in such a way that a limiting volumetric flow is smaller than the maximum volumetric flow (Vₘₐₓ), in particular is at most 60%, at most 50%, at most 40%, at most 30% or at most 20% of the maximum volumetric flow (Vₘₐₓ).

9. Method according to any one of the preceding claims, **characterised in that** in a further operating mode a limiting volumetric flow corresponds to the maximum volumetric flow (V') and/or the limiting pressure difference corresponds to the maximum pressure difference (Δpₘₐₓ).

10. Ventilation device, in particular for carrying out the method according to one or more of the preceding claims, the ventilation device having a radial fan for conveying air, which has a radial fan rotor and an electronically commutated electric motor for driving the radial fan rotor and has a specific fan characteristic curve (1,2, 3, 4, 5) according to which the radial fan effects a specific pressure difference (Δp) across the radial fan at a specific volumetric flow (V) conveyed by the radial fan, wherein in constant operation of the radial fan with at least one constant operating parameter a constant operation characteristic curve (1) is present and a maximum pressure difference (Δpₘₐₓ) results at a minimum volumetric flow and a maximum volumetric flow (Vₘₐₓ) results at a minimum pressure difference, wherein a power consumption of the electric motor and/or a current consumption of the electric motor and/or a rotational speed of the electric motor and/or a duty cycle for pulse-width modulated control of the radial fan is used as the constant operating parameter, the ventilation device being adapted to operate the radial fan in at least one operating mode by changing the fan characteristic curve in such a way that the fan characteristic curve (3, 4, 5) differs from the constant operation characteristic curve, so that a limiting pressure difference which is present at minimum volumetric flow is smaller than the maximum pressure difference (Δₚₘₐₓ), **characterized in that** the ventilation device is adapted in such a way that, in the at least one operating mode, in the case of a pressure difference between the minimum pressure difference and an intermediate pressure difference, an actual volumetric flow conveyed by the radial fan is regulated to a setpoint volumetric flow using the rotational speed of the electric motor as a control variable and, in the case of a pressure difference between the intermediate pressure difference and the maximum pressure difference, with the pressure difference increasing starting from the intermediate pressure difference, the rotational speed is kept constant or is reduced so that the limiting pressure difference is smaller than the maximum pressure difference.

## Revendications

1. Procédé pour faire fonctionner un appareil de ventilation, l'appareil de ventilation présentant un ventilateur radial pour transporter de l'air, qui dispose d'une roue de ventilateur radial et d'un moteur électrique à commutation électronique pour entraîner la roue de ventilateur radial et présente une courbe caractéristique de ventilateur (1, 2, 3, 4, 5) selon laquelle le ventilateur radial provoque une certaine différence de pression (Δp) à travers le ventilateur radial pour un certain débit volumique (V) transporté par le ventilateur radial, une courbe caractéristique de fonctionnement constant (1) étant présente lors d'un fonctionnement constant du ventilateur radial avec au moins un paramètre de fonctionnement constant et une différence de pression maximale (Δpₘₐₓ) étant obtenue pour un débit volumique minimal et un débit volumique maximal (Vₘₐₓ) étant obtenu pour une différence de pression minimale, une consommation de puissance du moteur électrique et/ou une consommation de courant du moteur électrique et/ou une vitesse de rotation du moteur électrique et/ou un rapport cyclique étant utilisés comme paramètre de fonctionnement constant pour la commande à modulation de largeur d'impulsion du ventilateur radial, le ventilateur radial étant actionné dans au moins un mode de fonctionnement par une modification de la courbe caractéristique du ventilateur de telle sorte que la courbe caractéristique du ventilateur (3, 4, 5) est différente de la courbe caractéristique de fonctionnement constante, de sorte qu'une différence de pression limite présente pour un débit volumique minimal est inférieure à la différence de pression maximale (Δpₘₐₓ), **caractérisé en ce que**, dans le au moins un mode de fonctionnement, pour une différence de pression entre la différence de pression minimale et une différence de pression intermédiaire, un débit volumique réel transporté par le ventilateur radial est régulé à un débit volumique de consigne en utilisant la vitesse de rotation du moteur électrique comme grandeur de réglage et, pour une différence de pression entre la différence de pression intermédiaire et la différence de pression maximale, avec une différence de pression croissante à partir de la différence de pression intermédiaire, la vitesse de rotation est maintenue constante ou est réduite afin que la différence de pression limite soit inférieure à la différence de pression maximale.

2. Procédé selon la revendication 1, **caractérisé en ce qu'**un rapport cyclique est détecté pour une commande à modulation de largeur d'impulsion du ventilateur radial lors d'une régulation.

3. Procédé selon la revendication 2, **caractérisé en ce qu'**au moins une des grandeurs suivantes est utilisée comme grandeur d'entrée pour la régulation : la consommation de puissance du moteur électrique, la consommation de courant du moteur électrique, la vitesse de rotation du moteur électrique et/ou le rapport cyclique pour la commande à modulation de largeur d'impulsion du ventilateur radial.

4. Procédé selon l'une des revendications précédentes, **caractérisé en ce que** la différence de pression limite est au plus égale à 80 %, au plus égale à 75 %, au plus égale à 70 %, au plus égale à 65 %, au plus égale à 60 %, au plus égale à 55 % ou au plus égale à 50 % de la différence de pression maximale (Δpₘₐₓ).

5. Procédé selon l'une des revendications précédentes, **caractérisé en ce que** le ventilateur radial est actionné de telle sorte que, lorsque la différence de pression (Δp) diminue à partir de la différence de pression limite, le débit volumique (V) augmente jusqu'à un débit volumique de maintien atteint à la différence de pression intermédiaire et reste constant lorsque la différence de pression (Δp) continue à diminuer à partir de la différence de pression intermédiaire.

6. Procédé selon l'une des revendications précédentes, **caractérisé en ce que** la différence de pression limite est supérieure à la différence de pression intermédiaire d'un facteur d'au moins 2,0, d'au moins 2,25, d'au moins 2,5, d'au moins 2,75 ou d'au moins 3,0.

7. Procédé selon l'une des revendications précédentes, **caractérisé en ce qu'**un débit volumique limite s'établit pour la différence de pression minimale, un débit volumique de maintien atteint pour la différence de pression intermédiaire correspondant à au moins 90 %, de préférence à au moins 95 %, au moins 98 % ou au moins 99 %, du débit volumique limite.

8. Procédé selon l'une des revendications précédentes, **caractérisé en ce que** le ventilateur radial est actionné de telle sorte qu'un débit volumique limite est inférieur au débit volumique maximal (Vₘₐₓ), en particulier est égal à au plus 60 %, au plus 50 %, au plus 40 %, au plus 30 % ou au plus 20 % du débit volumique maximal (Vₘₐₓ).

9. Procédé selon l'une des revendications précédentes, **caractérisé en ce que**, dans un autre mode de fonctionnement, un débit volumique limite correspond au débit volumique maximal (V') et/ou la différence de pression limite correspond à la différence de pression maximale (Δpₘₐₓ).

10. Appareil de ventilation, en particulier pour la mise en œuvre du procédé selon l'une ou plusieurs des revendications précédentes, l'appareil de ventilation comprenant un ventilateur radial pour transporter de l'air, qui dispose d'une roue de ventilateur radial et d'un moteur électrique à commutation électronique pour entraîner la roue de ventilateur radial et qui présente une certaine courbe caractéristique de ventilateur (1, 2, 3, 4, 5), selon laquelle le ventilateur radial provoque une certaine différence de pression (Δp) à travers le ventilateur radial pour un certain débit volumique (V) transporté par le ventilateur radial, une courbe caractéristique de fonctionnement constant (1) étant présente lors d'un fonctionnement constant du ventilateur radial avec au moins un paramètre de fonctionnement constant et une différence de pression maximale (Δpₘₐₓ) étant obtenue pour un débit volumique minimal et un débit volumique maximal (Vₘₐₓ) étant obtenu pour une différence de pression minimale, une consommation de puissance du moteur électrique et/ou une consommation de courant du moteur électrique et/ou une vitesse de rotation du moteur électrique et/ou un rapport cyclique étant utilisés comme paramètre de fonctionnement constant pour la commande à modulation de largeur d'impulsion du ventilateur radial, l'appareil de ventilation étant conçu pour faire fonctionner le ventilateur radial dans au moins un mode de fonctionnement par une modification de la courbe caractéristique du ventilateur de telle sorte que la courbe caractéristique du ventilateur (3, 4, 5) soit différente de la courbe caractéristique de fonctionnement constant, de sorte qu'une différence de pression limite présente pour un débit volumique minimal soit inférieure à la différence de pression maximale (Δpₘₐₓ), **caractérisé en ce que** l'appareil de ventilation est conçu de telle sorte, **en ce que**, dans le au moins un mode de fonctionnement, pour une différence de pression entre la différence de pression minimale et une différence de pression intermédiaire, un débit volumique réel transporté par le ventilateur radial est régulé à un débit volumique de consigne en utilisant la vitesse de rotation du moteur électrique comme grandeur de réglage et, pour une différence de pression entre la différence de pression intermédiaire et la différence de pression maximale, avec une différence de pression croissante à partir de la différence de pression intermédiaire, la vitesse de rotation est maintenue constante ou est réduite, afin que la différence de pression limite soit inférieure à la différence de pression maximale.
